(19) Europäisches Patentamt
European Patent Office
Office européen des brevets

(11) EP 4 239 014 A1

(12) EUROPEAN PATENT APPLICATION

(43) Date of publication:
06.09.2023 Bulletin 2023/36

(21) Application number: 22159607.5

(22) Date of filing: 02.03.2022

(51) International Patent Classification (IPC):
*C08J 5/18* (2006.01) *C08L 23/06* (2006.01)
*C08L 23/08* (2006.01)

(52) Cooperative Patent Classification (CPC):
(C-Sets available)
**C08J 5/18; C08L 23/0815;** C08F 110/02;
C08F 210/16; C08J 2323/06; C08L 2203/16;
C08L 2205/025; C08L 2207/062 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **WANG, Jingbo**
**4021 Linz (AT)**
- **BERGER, Friedrich**
**4021 Linz (AT)**
- **ALABRUNE, Arnaud**
**92400 Courbevoie (FR)**
- **POTTER, Elisabeth**
**4021 Linz (AT)**

(74) Representative: **Maiwald GmbH**
**Elisenhof**
**Elisenstraße 3**
**80335 München (DE)**

# (54) FILM COMPRISING A POLYETHYLENE COMPOSITION

(57) The present invention relates to a film comprising a polyethylene composition having a density of from 946.0 to 972.0 kg/m$^3$ and a melt flow rate $MFR_2$ of from 0.1 to 3.0 g/10 min which comprises from 85.0 to 98.0 wt%, based on the total weight of the polyethylene composition, of a multimodal high density polyethylene (A) and from 2.0 to 15.0 wt%, based on the total weight of the polyethylene composition, of a polyethylene wax (B) and the use of such as polyethylene composition for the production of a film.

EP 4 239 014 A1

(52) Cooperative Patent Classification (CPC): (Cont.)

C-Sets
**C08F 210/16, C08F 2/001;**
**C08F 210/16, C08F 4/6492;**
**C08L 23/0815, C08L 23/06, C08L 91/06;**
C08F 110/02, C08F 2500/07, C08F 2500/12;
C08F 210/16, C08F 210/08, C08F 2500/07,
C08F 2500/12, C08F 2500/26, C08F 2500/04,
C08F 2500/34, C08F 2500/33

## Description

The present invention relates to a film comprising a polyethylene composition having a density of from 946.0 to 972.0 kg/$m^3$ and a melt flow rate $MFR_2$ of from 0.1 to 3.0 g/10 min which comprises a multimodal high density polyethylene and a polyethylene wax and the use of such as polyethylene composition for the production of a film.

## Technical background

Polyethylene films are widely used in packaging applications.

General trends in packaging are downgauging with superior stiffness and toughness to get balanced properties required for packaging integrity at higher packaging speed. To improve stiffness, density of packaging materials needs to be high, hence higher density medium and high density polyethylene (MDPE and HDPE) products are being used more and more in the packaging applications. Another key aspect of latest advanced packaging is superior barrier performance and hence multilayer structure in which different polymers can be coextruded with different layer(s), such as MDPE or HDPE layers laminated with PET layers are commonly used for various packaging. However, such laminates cannot be readily recycled due to presence of two chemically different materials.

New trends towards improved recycle rates of polymeric packaging material ask for better solutions, especially solutions, which offer packaging materials made of only one polymeric material.

For offering such solutions based on polyethylene, polyethylene compositions are required which show better properties especially in behalf of improved stiffness and impact properties.

WO 2020/109289 A1 discloses films based on high density polyethylene compositions.

In the present invention it has surprisingly been found that the stiffness and impact properties as well as the optical properties of films based on polyethylene compositions can be improved when adding a polyethylene wax in small amounts to a high density polyethylene.

## Summary of the invention

The present invention relates to a film comprising a polyethylene composition having a density of from 946.0 to 972.0 kg/$m^3$, determined according to ISO 1183, and a melt flow rate $MFR_2$ of from 0.1 to 3.0 g/10 min, determined according to ISO 1133 at a temperature of 190°C and a load of 2.16 kg, wherein the polyethylene composition comprises

(A) from 85.0 to 98.0 wt%, based on the total weight of the polyethylene composition, of a multimodal high density polyethylene having a density of from 945 to 970 kg/$m^3$, determined according to ISO 1183, and a melt flow rate $MFR_2$ of 0.05 to 4.0 g/10 min, determined according to ISO 1133 at a temperature of 190°C and a load of 2.16 kg; wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/$m^3$, determined according to ISO 1183, and a melt flow rate $MFR_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of a second polyethylene fraction having a density of from 925 to 970 kg/$m^3$, determined according to ISO 1183, and a melt flow rate $MFR_2$ of 0.00001 to 1.0 g/10 min, determined according to ISO 1133 at a temperature of 190°C and a load of 2.16 kg;

(B) from 2.0 to 15.0 wt%, based on the total weight of the polyethylene composition, of a polyethylene wax having a density of from 930 to 990 kg/$m^3$, determined according to ISO 1183.

Further, the present invention relates to the use of a polyethylene composition having a density of from 946.0 to 972.0 kg/$m^3$, determined according to ISO 1183, and a melt flow rate $MFR_2$ of from 0.1 to 3.0 g/10 min, determined according to ISO 1133 at a temperature of 190°C and a load of 2.16 kg, wherein the polyethylene composition comprises

(A) from 85.0 to 98.0 wt%, based on the total weight of the polyethylene composition, of a multimodal high density polyethylene having a density of from 945 to 970 kg/$m^3$, determined according to ISO 1183, and a melt flow rate $MFR_2$ of 0.05 to 4.0 g/10 min, determined according to ISO 1133 at a temperature of 190°C and a load of 2.16 kg; wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/$m^3$, determined according to ISO 1183, and a melt flow rate $MFR_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of a second polyethylene fraction having a density of from 925 to 970 kg/$m^3$, determined according to ISO 1183, and a melt flow rate $MFR_2$ of 0.00001 to 1.0 g/10 min, determined according to ISO 1133 at a temperature of 190°C and a load of 2.16 kg;

(B) from 2.0 to 15.0 wt%, based on the total weight of the polyethylene composition, of a polyethylene wax having a density of from 930 to 990 kg/$m^3$, determined according to ISO 1183

for the production of a film as described above or below.

**Definitions**

A polyethylene composition according to the present invention denotes a composition comprising one or more polymers, wherein the molar amounts of the components of the polymer composition add up to a total amount of at least 50 mol-% ethylene monomer units.

An 'ethylene homopolymer' denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

A polymer is denoted 'ethylene copolymer' if the polymer is derived from ethylene monomer units and at least one alpha-olefin comonomer. The alpha-olefin comonomer preferably is selected from alpha-olefin comonomers with 4 to 8 carbon atoms, more preferably 4 to 6 carbon atoms. Suitable alpha-olefin comonomer species are 1-butene, 1-hexene, 4-methyl-1-pentene, 1-octene or their mixtures. Preferred are 1-butene and 1-hexene.

Polyethylenes are usually classified by means of their density as low density e.g. as polyethylenes (LDPE), linear low density polyethylenes (LLDPE), medium density polyethylenes (MDPE) and high density polyethylenes (HDPE). In literature polyethylenes with a density of at least 940 kg/$m^3$ are usually classified as high density polyethylenes (HDPE).

A polyethylene comprising more than one fraction differing from each other in at least one property, such as weight average molecular weight or comonomer content, is called "multimodal". If the multimodal polyethylene composition or base resin includes two different fractions, it is called "bimodal" and, correspondingly, if it includes three different fractions, it is called "trimodal". The form of the molecular weight distribution curve, i.e. the appearance of the graph of the polymer weight fraction as function of its molecular weight, of such a multimodal polyethylene composition or base resin will show two or more maxima depending on the modality or at least be distinctly broadened in comparison with the curves of the individual fractions.

A polyethylene wax is a polyethylene having a low weight average molecular weight of usually not more than 30000 g/mol based on ethylene monomer chains.

The amounts disclosed in herein relate to weight amounts in % by weight or wt%, if not stated otherwise.

**Detailed description**

The present invention relates to a film comprising a polyethylene composition having a density of from 946.0 to 972.0 kg/$m^3$, determined according to ISO 1183, and a melt flow rate $MFR_2$ of from 0.1 to 3.0 g/10 min, determined according to ISO 1133 at a temperature of 190°C and a load of 2.16 kg, wherein the polyethylene composition comprises

(A) from 85.0 to 98.0 wt%, based on the total weight of the polyethylene composition, of a multimodal high density polyethylene having a density of from 945 to 970 kg/$m^3$, determined according to ISO 1183, and a melt flow rate $MFR_2$ of 0.05 to 4.0 g/10 min, determined according to ISO 1133 at a temperature of 190°C and a load of 2.16 kg; wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/$m^3$, determined according to ISO 1183, and a melt flow rate $MFR_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of a second polyethylene fraction having a density of from 925 to 970 kg/$m^3$, determined according to ISO 1183, and a melt

flow rate $MFR_2$ of 0.00001 to 1.0 g/10 min, determined according to ISO 1133 at a temperature of 190°C and a load of 2.16 kg;

(B) from 2.0 to 15.0 wt%, based on the total weight of the polyethylene composition, of a polyethylene wax having a density of from 930 to 990 kg/$m^3$, determined according to ISO 1183.

Film

The film of the present invention preferably is a non-oriented film. This means that the film is preferably not stretched in one or two direction to produce a mono-or bioriented film, such as machine direction oriented (MDO) film, or biaxially oriented (BO) film.

Preferably the film is a monolayer film.

The film is preferably a blown film or cast film.

The film preferably has a thickness of from 5 to 100 μm, preferably from 10 to 80 μm, more preferably from 25 to 60 μm.

It has surprisingly been found that the film according to the present invention shows an improved balance of properties in regard of improved optical properties, improved mechanical properties showing improved stiffness and comparable or even improved impact properties.

The film according to the present invention preferably has one or more, preferably all of the following optical properties:

The film preferably has a haze of not more 75.0 %, preferably not more than 72.0 %, more preferably not more than 70.0%, determined according to ASTM D1003 on a non-oriented blown film sample having a thickness of 40 μm.

The lower limit of the haze is usually at least 50.0 %, preferably at least 60.0 %, determined according to ASTM D1003 on a non-oriented blown film sample having a thickness of 40 μm.

Hence, the film preferably has a haze of from 50.0 to 75.0 %, preferably from 50.0 to 72.0 %, more preferably from 60.0 to 70.0%, determined according to ASTM D1003 on a non-oriented blown film sample having a thickness of 40 μm.

The film preferably has a clarity of at least 20.0 %, preferably at least 22.5 %, more preferably at least 24.0%, determined according to ASTM D1003 on a non-oriented blown film sample having a thickness of 40 μm.

The upper limit of the clarity is usually not more than 50.0 %, preferably not more than 40.0 %, determined according to ASTM D1003 on a non-oriented blown film sample having a thickness of 40 μm.

Hence, the film preferably has a clarity of from 20.0 to 50.0 %, preferably from 22.5 to 50.0 %, more preferably from 24.0 to 40.0 %, determined according to ASTM D1003 on a non-oriented blown film sample having a thickness of 40 μm.

The film according to the present invention preferably has one or more, preferably all of the following mechanical properties:

The film preferably has a tensile modulus in machine direction (TM-MD) of at least 850 MPa, more preferably at least 900 MPa, still more preferably at least 930 MPa, determined according to ISO 527-3 on a non-oriented blown film sample having a thickness of 40 μm.

The upper limit of the tensile modulus in machine direction (TM-MD) is usually not more than 1500 MPa, preferably not more than 1250 MPa, determined according to ISO 527-3 on a non-oriented blown film sample having a thickness of 40 μm.

Hence, the film preferably has a tensile modulus in machine direction (TM-MD) from 850 to 1500 MPa, preferably from 900 to 1500 MPa, more preferably from 930 to 1250 MPa, determined according to ISO 527-3 on a non-oriented blown film sample having a thickness of 40 μm.

The film preferably has a tensile modulus in transverse direction (TM-TD) of at least 1000 MPa, more preferably at least 1100 MPa, still more preferably at least 1200 MPa, determined according to ISO 527-3 on a non-oriented blown film sample having a thickness of 40 μm. The upper limit of the tensile modulus in transverse direction (TM-TD) is usually not more than 1750 MPa, preferably not more than 1500 MPa, determined according to ISO 527-3 on a non-oriented blown film sample having a thickness of 40 μm.

Hence, the film preferably has a tensile modulus in traverse direction (TM-TD) of from 1000 to 1750 MPa, preferably from 1100 to 1750 MPa, more preferably from 1200 to 1500 MPa, determined according to ISO 527-3 on a non-oriented blown film sample having a thickness of 40 μm.

An improved balance of properties in regard of the optical and mechanical properties of the film according to the present invention can be exemplified by the ratio of a tensile modulus in machine direction (TM-MD) to haze (TM-MD/haze).

The film according to the invention preferably has a ratio of a tensile modulus in machine direction (TM-MD) to haze (TM-MD/haze) of from 13.3 to 16.0 [MPa/%], more preferably from 13.5 to 15.7 [MPa/%], still more preferably from 13.7 to 15.7 [MPa/%], determined on a non-oriented blown film sample having a thickness of 40 μm.

The film according to the present invention preferably has the following impact properties: The film according to the invention preferably has a dart drop impact strength (DDI) of from 10 to 50 g, preferably from 15 to 45 g, more preferably from 17 to 40 g, determined according to ASTM D1709, method A on a non-oriented blown film sample having a thickness of 40 μm.

The film comprises the polyethylene composition as defined above or below.

It is preferred that the film comprises from 90 to 100 wt%, more preferably from 95 to 100 wt%, still more preferably from 99 to 100 wt%, preferably consists of said polyethylene composition.

The film is preferably produced by blown film extrusion or by cast film extrusion.

These processes are well known in the art and are easily adaptable for producing films comprising the polyethylene composition according to the present invention.

## Polyethylene composition

The polyethylene composition comprises from 85.0 to 98.0 wt%, based on the total weight of the polyethylene composition, of the multimodal high density polyethylene (A) and from 2.0 to 15.0 wt%, based on the total weight of the polyethylene composition, of the polyethylene wax (B).

It is preferred that the polyethylene composition comprises of from 87.5 to 97.0 wt%, more preferably from 90.0 to 96.0 wt%, based on the total weight of the polyethylene composition, of the multimodal high density polyethylene (A).

It is further preferred that the polyethylene composition comprises from 3.0 to 12.5 wt%, more preferably from 4.0 to 10.0 wt%, based on the total weight of the polyethylene composition, of the polyethylene wax (B).

The polyethylene composition can comprise further components different from the multimodal high density polyethylene (A) and the polyethylene wax (B). Other components can be polymers different from the multimodal high density polyethylene (A) and the polyethylene wax (B) or additives. Usually the amount of other components is not more than 10 wt%, based on the total weight of the polyethylene composition.

It is preferred that the polyethylene composition does not comprise any polymers different from the multimodal high density polyethylene (A) and the polyethylene wax (B). Thus, it is preferred that the polymeric components of the polyethylene composition consist of the multimodal high density polyethylene (A) and the polyethylene wax (B).

The polyethylene composition can comprise usual additives for utilization with polyolefins, such as stabilizers (e.g. antioxidant agents), acid scavengers and/or UV-stabilizers. Preferably, the amount of these additives is 5.0 wt% or below, more preferably 2.5 wt% or below, more preferably 1.0 wt% or below, of the polyethylene composition. The lower limit of the additives, if present, is usually 0.001 wt%, preferably 0.01 wt%.

Additives can be added to the polyethylene composition in form of masterbatches in which the additives are embedded in carrier polymers in concentrated form in order to ensure better distribution of the additives in the polyethylene composition. In the case that the additives are added in form of a masterbatch, the amount of carrier polymer is added to the amount of additives, not to the amount of polymeric components in the polyethylene composition.

The polyethylene composition has a density of from 946.0 to 972.0 kg/m$^3$, preferably from 950.0 to 970.0 kg/m$^3$, more preferably from 952.0 to 965 kg/m$^3$, still more preferably from 954.0 to 960.0 kg/m$^3$, determined according to ISO 1183.

Further, the polyethylene composition has a melt flow rate $MFR_2$ of from 0.1 to 3.0 g/10 min, preferably from 0.3 to 2.5 g/10 min, more preferably from 0.5 to 2.0 g/10 min, still more preferably from 0.7 to 1.5 g/10 min, determined according to ISO 1133 at a temperature of 190°C and a load of 2.16 kg.

The polyethylene composition is preferably further characterized by the following properties:

### *$MFR_{21}$*

The polyethylene composition preferably has a melt flow rate $MFR_{21}$ (190°C, 21.6 kg) of from 50 to 90 g/10 min, more preferably of 55 to 80 g/10 min, and still more preferably of 60 to 70 g/10 min, determined according to ISO 1133.

### *$FRR_{21/2}$*

The polyethylene composition preferably has a flow rate ratio $FRR_{21/2}$, being the ratio of $MFR_{21}$ to $MFR_2$, of from 45 to 100, more preferably of from 60 to 90 and still more preferably of from 70 to 85.

### *Melting temperature Tm*

The polyethylene composition preferably has a melting temperature Tm of from 125 to 150°C, more preferably from 127 to 145°C, still more preferably from 130 to 140°C.

*Crystallization temperature Tc*

The polyethylene composition preferably has a crystallization temperature Tc of from 105 to 130°C, more preferably from 110 to 127°C, still more preferably from 115 to 125°C.

*Melting Enthalpy Hm*

The polyethylene composition preferably has a melting enthalpy Hm of from 170 to 250 J/g, more preferably from 185 to 240 J/g, still more preferably from 200 to 225 J/g.

*Weight average molecular weight Mw*

The polyethylene composition preferably has a weight average molecular weight, Mw, in the range of from 110000 to 135000 g/mol, more preferably from 115000 to 130000 g/mol, still more preferably from 120000 to 126000 g/mol.

*z average molecular weight Mz*

The polyethylene composition preferably has a z average molecular weight, Mz, in the range of from 575000 to 725000 g/mol, preferably from 600000 to 700000 g/mol, more preferably from 625000 to 690000 g/mol.

*Molecular weight distribution Mw/Mn*

The polyethylene composition preferably has a molecular weight distribution, Mw/Mn, in the range of from 15.0 to 25.0, preferably from 16.5 to 23.0, more preferably from 17.0 to 22.0.

*Ratio of Mz/Mw*

The polyethylene composition preferably has a ratio of Mz/Mw, in the range of from 3.0 to 7.5, preferably from 4.0 to 7.0, more preferably from 5.0 to 6.0.

The polyethylene composition is preferably produced by mixing the multimodal high density polyethylene (A) and the polyethylene wax (B) and optionally the further components as described above. These components can be mixed prior to the preparation of the film e.g. by melt mixing or compounding so that the polyethylene composition is obtained and can be stored before film preparation. The components can also be mixed during the preparation of the film, e.g. by adding the components in the same or different hoppers into the extruder of the film production line.

The melt mixing or compounding device may be e.g. any conventionally used extruder, such as a twin screw extruder. As an example of an extruder for the present compounding step may be those supplied by Japan Steel works, Kobe Steel, Farrel-Pomini or Coperion, e.g. a ZSK extruder.

<u>Multimodal high density polyethylene (A)</u>

The multimodal high density polyethylene (A) may be a homopolymer or a copolymer, but is preferably an ethylene copolymer.

The comonomer contribution preferably is up to 10 % by mol, more preferably up to 5 % by mol. Ideally however there are very low levels of comonomer present in the polymers of the present invention such as 0.1 to 2.0 mol%, e.g. 0.1 to 1.0 mol%.

The other copolymerizable monomer or monomers are preferably C3-12, especially C3-10, alpha olefin comonomers, particularly singly or multiply ethylenically unsaturated comonomers, in particular C3-10-alpha olefins such as propene, 1-butene, 1-hexene, 1-octene, and 4-methyl-1-pentene. The use of 1-hexene, 1-octene and 1-butene, or mixtures thereof, is particularly preferred, especially 1-hexene and 1-butene. Ideally there is only one comonomer present.

The multimodal high density polyethylene (A) is multimodal and therefore comprises at least two components. The multimodal high density polyethylene (A) is preferably bimodal.

The multimodal high density polyethylene (A) comprises at least two polyethylene fractions (A-1) and (A-2), wherein the first polyethylene fraction (A-1) has a lower molecular weight than the second polyethylene fraction (A-2).

Usually, a polyethylene comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions the composition is consisting of. The polyethylene may also be multimodal with respect to comonomer content.

The form of the molecular weight distribution curve, i.e. the appearance of the graph of the polymer weight fraction as a function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The multimodal high density polyethylene (A) preferably is bimodal, i.e. the high density polyethylene (A) consists of the first polyethylene fraction (A-1) and the second polyethylene fraction (A-2).

The multimodal high density polyethylene (A) has a density of 945 to 970 kg/$m^3$. Preferable ranges for the density are from 950 to 965 kg/$m^3$, preferably from 953 to 963 kg/$m^3$, more preferably from 955 to 960 kg/$m^3$, measured according to ISO 1183.

The multimodal high density polyethylene (A) has a melt flow rate $MFR_2$ of 0.05 to 4.0 g/10 min. Preferable ranges for the $MFR_2$ are from 0.1 to 3.0 g/10 min, more preferably from 0.2 to 2.0 g/10 min, still more preferably from 0.5 to 1.8 g/10 min, determined according to ISO 1133 at a temperature of 190°C and a load of 2.16 kg.

The high density polyethylene (A) preferably has a melt flow rate $MFR_{21}$ of 15 to 75 g/10min, more preferably 20 to 65 g/10 min, still more preferably 30 to 55 g/10 min, determined according to ISO 1133 at a temperature of 190°C and a load of 21.6 kg.

The high density polyethylene (A) preferably has a Flow Rate Ratio (FRR) of the $MFR_{21}/MFR_2$ of from 35 to 85, preferably from 45 to 75, still more preferably from 50 to 65.

The high density polyethylene (A) preferably has a melting temperature Tm of from 125 to 150°C, more preferably from 127 to 145°C, still more preferably from 130 to 140°C.

The high density polyethylene (A) preferably has a crystallization temperature Tc of from 105 to 130°C, more preferably from 110 to 127°C, still more preferably from 115 to 125°C.

The high density polyethylene (A) preferably has a melting enthalpy Hm of from 170 to 250 J/g, more preferably from 185 to 240 J/g, still more preferably from 200 to 225 J/g.

The high density polyethylene (A) preferably has a weight average molecular weight Mw of from 115000 to 140000 g/mol, more preferably from 120000 to 135000 g/mol, still more preferably from 125000 to 132000 g/mol.

The high density polyethylene (A) preferably has a z average molecular weight Mz of from 600000 to 750000 g/mol, more preferably from 625000 to 735000 g/mol, still more preferably from 650000 to 725000 g/mol.

The high density polyethylene (A) preferably has a Mw/Mn ratio of from 10.0 to 22.5, more preferably from 11.0 to 20.0, still more preferably from 12.0 to 17.5.

The high density polyethylene (A) preferably has a Mz/Mw ratio of from 3.0 to 7.5, more preferably from 4.0 to 7.0, still more preferably from 5.0 to 6.0.

The high density polyethylene (A) comprises at least a first polyethylene fraction (A-1) and a second polyethylene fraction (A-2). In one particularly preferable embodiment, the high density polyethylene (A) consists of fractions (A-1) and (A-2).

The weight ratio of fraction (A-1) to fraction (A-2) in the composition is in the range 40:60 to 60:40, more preferably 43:57 to 55:45, still more preferably 45:55 to 50:50.

The first polyethylene fraction (A-1) is preferably present in the high density polyethylene (A) in an amount of from 40 to 60 wt%, preferably from 43 to 55 wt% and more preferably from 45 to 50 wt%, based on the total weight of the high density polyethylene (A).

The second polyethylene fraction (A-2) is present in the high density polyethylene (A) in an amount of from 40 to 60 wt%, preferably from 45 to 57 wt% and more preferably from 50 to 55 wt%, based on the total weight of the high density polyethylene (A).

In a particularly preferred embodiment, the weight amounts of fractions (A-1) and (A-2) add up to 100 %.

Each fraction (A-1) and fraction (A-2) may be an ethylene homopolymer or an ethylene copolymer. By ethylene homopolymer is meant a polymer comprising at least 97 mol% (such as at least 98 mol%, especially at least 99.5 mol%) ethylene monomer units. The term "ethylene copolymer" is defined above. Most preferably, fraction (A-1) is an ethylene homopolymer and fraction (A-2) is an ethylene copolymer.

The high density polyethylene (A) is produced in a multistage process wherein fractions (A-1) and (A-2) are produced in subsequent stages. In such a case, the properties of the fractions produced in the second step (or further steps) of the multistage process can either be inferred from polymers which are separately produced in a single stage by applying identical polymerization conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13. Thus, although not directly measurable on the multistage process products, the properties of the fractions produced in higher stages of such a multistage process can be determined by applying either or both of the above methods. The skilled person will be able to select the appropriate method.

High density polyethylenes produced in a multistage process are also designated as *"in-situ"* blends. The resulting end product consists of an intimate mixture of the polymers from the two or more reactors, the different molecular-weight-distribution curves of these polymers together forming a molecular-weight-distribution curve having a broad maximum or two or more maxima, i.e. the end product is a multimodal polymer mixture.

The first polyethylene fraction (A-1) has an $MFR_2$ of 50 to 600 g/10min, preferably from 150 to 500 g/10 min, more preferably from 250 to 400 g/10 min, determined according to ISO 1133 at a temperature of 190°C and a load of 2.16 kg.

The first polyethylene fraction (A-1) has a density of 955 to 980 kg/$m^3$, preferably from 960 to 975 kg/$m^3$, more preferably from 965 to 972 kg/$m^3$, determined according to ISO 1183.

The first polyethylene fraction (A-1) can be an ethylene homopolymer or copolymer. Preferably, Fraction (A-1) is an ethylene homopolymer.

The second polyethylene fraction (A-2) has a melt flow rate $MFR_2$ of from 0.00001 to 1.0 g/10 min, preferably from 0.0001 to 0.5 g/10 min, more preferably from 0.0005 to 0.1 g/10 min, determined according to ISO 1133 at a temperature of 190°C and a load of 2.16 kg.

The second polyethylene fraction (A-2) has a density of 925 to 970 kg/$m^3$, preferably from 930 to 960 kg/$m^3$, more preferably from 935 to 950 kg/$m^3$, determined according to ISO 1183.

The second polyethylene fraction (A-2) can be an ethylene homopolymer or copolymer. The second polyethylene fraction (A-2) is preferably a copolymer. Preferred ethylene copolymers employ alpha-olefins (e.g. C3-12 alpha-olefins, preferably C4-C8 alpha-olefins) as comonomers. Examples of suitable alpha-olefins include 1-butene, 1-hexene and 1-octene. 1-butene is an especially preferred comonomer.

Preparation of Multimodal HDPE

The multimodal high density polyethylene (A) may be produced by polymerization using conditions which create a multimodal (e.g. bimodal) polymer product ideally using a Ziegler Natta catalyst system. Typically, a two or more stage, i.e. multistage, polymerization process is used with different process conditions in the different stages or zones (e.g. different temperatures, pressures, polymerization media, hydrogen partial pressures, etc). Preferably, the multimodal (e.g. bimodal) composition is produced by a multistage polymerization, e.g. using a series of reactors, with optional comonomer addition preferably in only the reactor(s) used for production of the higher/highest molecular weight component(s). A multistage process is defined to be a polymerization process in which a polymer comprising two or more fractions is produced by producing each or at least two polymer fraction(s) in a separate reaction stage, usually with different reaction conditions in each stage, in the presence of the reaction product of the previous stage which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, batch reactors etc. (see for example WO97/44371 and WO96/18662).

Preferably, the multimodal high density polyethylene (A) is a bimodal high density polyethylene (A) prepared in a two-stage polymerization process.

The first polymerization stage produces an ethylene homopolymer or an ethylene copolymer, typically an ethylene homopolymer, which is subsequently fed to the second polymerization stage. The second polymerization stage can produce a further ethylene homopolymer, or an ethylene copolymer, preferably an ethylene copolymer.

The first polymerization stage is preferably a slurry polymerization step.

The slurry polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amounts of methane, ethane and/or butane.

The ethylene content in the fluid phase of the slurry may be from 1 to 50 % by mole, preferably from 2 to 20 % by mole and in particular from 2 to 10 % by mole. The benefit of having a high ethylene concentration is that the productivity of the catalyst is increased but the drawback is that more ethylene then needs to be recycled than if the concentration was lower.

The temperature in the first polymerization stage is typically from 60 to 100 °C, preferably from 70 to 90 °C. An excessively high temperature should be avoided to prevent partial dissolution of the polymer into the diluent and the fouling of the reactor. The pressure is generally from 1 to 150 bar, preferably from 40 to 80 bar.

The slurry polymerization may be conducted in any known reactor used for slurry polymerization. Such reactors include a continuous stirred tank reactor and a loop reactor. It is especially preferred to conduct the slurry polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerization stage as a slurry polymerization in a loop reactor. The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the $MFR_2$ of the resultant polymer. The amount of hydrogen needed to reach the desired MFR depends on the catalyst used and the polymerization conditions. The desired polymer properties may be obtained in slurry polymerization in a loop reactor with the molar ratio of hydrogen to ethylene of from 100 to 1000 mol/kmol (or mol/1000 mol) and preferably of from 200 to 800 mol/kmol.

The average residence time in the first polymerization stage is typically from 20 to 120 minutes, preferably from 30 to 80 minutes. As it is well known in the art the average residence time $\tau$ can be calculated from Equation 1 below:

Equation 1: Residence Time

$$\tau = \frac{V_R}{Q_o}$$

Where $V_R$ is the volume of the reaction space (in case of a loop reactor, the volume of the reactor, in case of the fluidized bed reactor, the volume of the fluidized bed) and $Q_o$ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the ethylene feed rate.

In the second polymerization stage, ethylene is polymerized, optionally together with at least one alpha-olefin comonomer, in the presence of the catalyst and the ethylene polymer produced in the first polymerization stage. It will thus be appreciated that the second polymerization stage generates an ethylene polymer, which combines with the ethylene polymer from the first polymerization stage, to form the multimodal high density polyethylene (A). Preferable comonomers are discussed hereinbefore, however it is noted that it is particularly preferable if the at least one alpha-olefin is butene.

The second polymerization stage is preferably a gas phase polymerization step, i.e. carried out in a gas-phase reactor. Any suitable gas phase reactor known in the art may be used, such as a fluidised bed gas phase reactor.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a nonreactive gas such as nitrogen or low boiling point hydrocarbons such as propane together with monomer (e.g. ethylene).

A chain transfer agent (e.g. hydrogen) is typically added to the second polymerization stage, preferably in amounts of 50 to 500 mol of $H_2$/kmol ethylene.

The split between the first polymerization stage and the second polymerization stage (i.e. between the slurry polymerization and the gas phase polymerization) is typically 40:60 to 60:40, more preferably 43:57 to 55:45, most preferably 45:55 to 50:50.

Prepolymerization

The polymerization steps discussed above may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is conducted in slurry.

Thus, the prepolymerization step may be conducted in a loop reactor. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerization step is typically from 0 to 90 °C, preferably from 20 to 80 °C and more preferably from 55 to 75 °C.

The pressure is not critical and is typically from 1 to 150 bar, preferably from 40 to 80 bar. The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount of polymer produced in the prepolymerization typically lies within 1 - 5 wt% in respect to the final multimodal high density polyethylene (A).

Catalyst

The polymerization is typically conducted in the presence of a Ziegler-Natta polymerization catalyst. Suitable Ziegler-Natta (ZN) catalysts generally comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a $MgCl_2$ based support. Preferably, the support is silica or a $MgCl_2$ based support.

Particularly preferred Ziegler-Natta catalysts are such as described in EP 1378528 A1.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. An especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound for example an aluminium compound on a magnesium dihalide, like magnesium dichloride. Such catalysts are disclosed, for instance, in WO 2005/118655, EP 810235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1000, preferably from 3 to 100 and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, 2,2-di-(2-furan)-propane, or isomers or mixtures thereof. Internal organic compounds are also often called as internal electron donors.

Polyethylene wax (B)

The polyethylene wax (B) has a density of from 930 to 990 kg/m$^3$, preferably from 950 to 988 kg/m$^3$, more preferably from 960 to 985 kg/m$^3$, determined according to ISO 1183.

It is preferred that the polyethylene wax (B) has one or more, preferably all of the following properties:

- a melting temperature Tm of from 115 to 135°C, preferably from 118 to 132°C, more preferably from 120 to 130°C;
- a melting enthalpy Hm of from 200 to 300 J/g, preferably from 225 to 275 J/g, more preferably from 235 to 260 J/g;
- a weight average molecular weight Mw of from 1000 to 15000 g/mol, preferably from 2000 to 12500 g/mol, more preferably from 2500 to 10000 g/mol, and/or
- a Mw/Mn ratio of from 1.0 to 4.0, preferably from 1.2 to 3.5, still more preferably from 1.4 to 3.0.

The polyethylene wax (B) is preferably produced by polymerization in the presence of a polymerization catalyst, preferably a Ziegler-Natta catalyst or a metallocene catalyst, more preferably a metallocene catalyst.

The polyethylene wax (B) can be an ethylene homopolymer wax or an ethylene random copolymer wax. The ethylene random copolymer wax is preferably a random copolymer of ethylene and C3 to C10 alpha-olefin comonomers. Preferably, the polyethylene wax (B) is an ethylene homopolymer wax.

The polyethylene wax (B) is preferably commercially available. Suitable commercially available polyethylene waxes are e.g. Licocene PE4201 is commercially available from Clariant and Excerex 40800 commercially available from MITSUI.

Use

Further, the present invention relates to the use of a polyethylene composition having a density of from 946.0 to 972.0 kg/m$^3$, determined according to ISO 1183, and a melt flow rate $MFR_2$ of from 0.1 to 3.0 g/10 min, determined according to ISO 1133 at a temperature of 190°C and a load of 2.16 kg, wherein the polyethylene composition comprises

(A) from 85.0 to 98.0 wt%, based on the total weight of the polyethylene composition, of a multimodal high density polyethylene having a density of from 945 to 970 kg/m$^3$, determined according to ISO 1183, and a melt flow rate $MFR_2$ of 0.05 to 4.0 g/10 min, determined according to ISO 1133 at a temperature of 190°C and a load of 2.16 kg;

wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/m$^3$, determined according to ISO 1183, and a melt flow rate $MFR_2$ of 50 to 600 g/10 min, determined according to ISO 1133 at a temperature of 190°C and a load of 2.16 kg; and

(A-2) from 40 to 60 wt%, based on the total weight of the multimodal high density polyethylene (A), of a second polyethylene fraction having a density of from 925 to 970 kg/m$^3$, determined according to ISO 1183, and a melt flow rate $MFR_2$ of 0.00001 to 1.0 g/10 min, determined according to ISO 1133 at a temperature of 190°C and a load of 2.16 kg;

(B) from 2.0 to 15.0 wt%, based on the total weight of the polyethylene composition, of a polyethylene wax having a density of from 930 to 990 kg/m$^3$, determined according to ISO 1183

for the production of a film as described above or below.

All embodiments and definitions of the polyethylene composition and the film as described above or below preferably also apply to the use of the invention.

The present invention will now be described in further detail by the examples provided below: The following definitions of terms and determination methods apply for the above general description of the invention as well as to the below examples unless otherwise defined.

## Determination methods

Melt Flow Rate (MFR)

The melt flow rates were measured at 190 °C with a load of 2.16 kg ($MFR_2$) or 21.6 kg ($MFR_{21}$) according to ISO 1133

*Calculation of* $MFR_2$ *of Fractions* (A-1) *and (A-2)*

$$\log A = x \cdot \log B + (1 - x) \cdot \log C$$

$$C = 10^{\wedge} \frac{(\log A - x.\log B)}{(1-x)}$$

B = $MFR_2$ of Fraction (A-1)
C = $MFR_2$ of Fraction (A-2)
A = final $MFR_2$ (mixture) of multimodal high density polyethylene (A)
X = weight fraction of Fraction (A)

Flow Rate Ratio (FRR21/2))

FRR is determined as the ratio between the $MFR_{21}$ and the $MFR_2$.

GPC

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N} (A_i \, x \, M_i)}{\sum_{i=1}^{N} A_i} \quad (2)$$

$$M_z = \frac{\sum_{i=1}^{N} (A_i \, x \, M_i^2)}{\sum_{i=1}^{N}(A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 µL of sample solution was injected per analysis. Data collection was performed using either Agilent Cirrus software version 3.3 or PolymerChar GPC-IR control software. The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \alpha_{PS} = 0.655$$

$$K_{PE} = 39 \times 10^{-3} \text{ mL/g}, \alpha_{PE} = 0.725$$

$$K_{PP} = 19 \times 10^{-3} \text{ mL/g}, \alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

Comonomer contents

• Quantification of microstructure by NMR spectroscopy

Quantitative nuclear-magnetic resonance (NMR) spectroscopy was used to quantify the comonomer content of the polymers.

Quantitative $^{13}C\{^{1}H\}$ NMR spectra recorded in the molten-state using a Bruker Advance III 500 NMR spectrometer operating at 500.13 and 125.76 MHz for $^{1}H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. {klimke06, parkinson07, castignolles09} Standard single-pulse excitation was employed utilising the NOE at short recycle delays{pollard04, klimke06} and the RS-HEPT decoupling scheme {fillip05,griffin07}. A total of 1024 (1k) transients were acquired per spectra.

Quantitative $^{13}C\{^{1}H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the $_{*}B2$ sites at 38.3 ppm accounting for the number of reporting sites per comonomer:

$$B = I_{*B2}$$

The amount consecutively incorporated 1 -butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1 -butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1 -hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the $_{*}$B4 sites at 39.9 ppm accounting for the number of reporting sites per comonomer:

$$H = I_{*B4}$$

The amount consecutively incorporated 1 -hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1 -hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B\ [mol\%] = 100 * fB$$

$$H\ [mol\%] = 100 * fH$$

The weight percent comonomer incorporation is calculated from the mole fraction:

$$B\ [wt\%] = 100 * ( fB * 56.11) / ( (fB * 56.11) + (fH * 84.16) + ((1-(fB + fH)) * 28.05) )$$

$$H\ [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128.
Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239
Griffin, J.M., Tripon, C., Samoson, A., Filip, C., and Brown, S.P., Mag. Res. in Chem. 2007 45, S1, S198
Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443
Busico, V., Cipullo, R., Monaco, G., Vacatello, M., Segre, A.L., Macromoleucles 30 (1997) 6251
Zhou, Z., Kuemmerle, R., Qiu, X., Redwine, D., Cong, R., Taha, A., Baugh, D. Winniford, B., J. Mag. Reson. 187 (2007) 225
Busico, V., Carbonniere, P., Cipullo, R., Pellecchia, R., Severn, J., Talarico, G., Macromol. Rapid Commun. 2007, 28, 1128
Resconi, L., Cavallo, L., Fait, A., Piemontesi, F., Chem. Rev. 2000, 100, 1253

Density

The density was measured according to ISO 1183 and ISO1872-2 for sample preparation.

DSC Analysis

Melting temperature Tm and Crystallization temperature Tc were measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature was determined from the cooling step, while melting temperature (Tm) and melting enthalpy (Hm) are determined from the second heating step.

Tensile modulus

Tensile modulus was measured in machine and/or transverse direction according to ISO 527-3 on film samples with a thickness of 40 μm produced as indicated below and at a cross head speed of 1 mm/min for the modulus.

Optical properties

Haze and clarity as a measure for the optical appearance of the films was determined according to ASTM D1003 on film samples with a thickness of 40 μm produced as indicated below.

Dart drop strength (DDI)

Dart-drop was measured using ASTM D1709, method A (Alternative Testing Technique) from the film samples with a thickness of 40 μm produced as indicated below. A dart with a 38 mm diameter hemispherical head is dropped from a height of 0.66 m onto a film clamped over a hole. Successive sets of twenty specimens are tested. One weight is used for each set and the weight is increased (or decreased) from set to set by uniform increments. The weight resulting in failure of 50 % of the specimens is calculated and reported.

**Examples:**

Multimodal high density polyethylene (HDPE):

The multimodal high density polyethylene (HDPE) is a bimodal HDPE produced using a ZN catalyst (as disclosed in EP 2 994 506) in a pilot plant, with a configuration of prepolymerization - loop - gas phase reactor using the conditions as shown in Table 1 below, having $MFR_2$ 0.8 g/10 min, density 955.5 kg/m$^3$. It is pelletized with 500 ppm Irganox 1010 (supplied by BASF), 2000 ppm Irgafos 168 (supplied by BASF), 500 ppm calciumstearate (CEASIT FI, supplied by Baerlocher) in a twin screw extruder.

Table 1: Polymerization conditions and properties of the HDPE

| | HDPE |
|---|---|
| **Prepolymerization** | |
| Temp. (°C) | 70 |
| Press. (kPa) | 5700 |
| $H_2$ (g/h) | 5.0 |
| **Loop reactor** | |
| Temp. (°C) | 95 |
| Press. (kPa) | 5500 |
| C2 conc. (mol-%) | 3.5 |
| $H_2$/C2 (mol/kmol) | 430.0 |
| Density | 970.0 |
| split % | 49.0 |
| $MFR_2$ (g/10 min) | 350.00 |
| **GPR** | |
| Temp. (°C) | 85 |
| Press. (kPa) | 2000 |
| H2/C2 (mol/kmol) | 110 |
| C4/C2 (mol/kmol) | 25.0 |
| split % | 51.0 |
| Density (kg/m$^3$) | 955.5 |
| $MFR_2$ (g/10 min) | 0.80 |
| **Pellet** | |
| Density (kg/m$^3$) | 955.5 |
| $MFR_2$ (g/10 min) | 0.8 |
| $MFR_{21}$ (g/10 min) | 47.4 |
| $MFR_{21}/MFR_2$ | 59 |
| $MFR_2$ in GPR (g/10 min) | 0.002 |

(continued)

| | HDPE |
|---|---|
| Density in GPR ($kg/m^3$) | 941.6 |

Polyethylene wax

Polyethylene wax 1 (wax 1) is Licocene PE4201, commercially available from Clariant. It has a density of 970 $kg/m^3$, a melting temperature Tm of 124°C, a melting enthalpy Hm of 252 J/g, a weight average molecular weight Mw of 3135 g/mol and a Mw/Mn ratio of 1.95. Polyethylene wax 2 (wax 2) is Excerex 40800, commercially available from MITSUI. It has a density of 980 $kg/m^3$, a melting temperature Tm of 128°C,a melting enthalpy Hm of 245 J/g, a weight average molecular weight Mw of 6945 g/mol and a Mw/Mn ratio of 2.65.

Film preparation

HDPE and polyethylene wax in the amounts given in Table 2 for inventive examples IE1 and IE2 and only HDPE for comparative example CE1 were compounded in a ZSK 18 twin screw extruder.

Blown films were produced from these compounds in Collin lab scale line, with BUR 1:2.5, film thickness 40 μm.The melt temperature for all compositions was 210°C.

The properties of the films are also shown in Table 2.

Table 2: Composition and properties of the compositions and films of examples IE1, IE2 and CE1

| | | IE1 | IE2 | CE1 |
|---|---|---|---|---|
| **Composition** | | | | |
| HDPE | wt% | 95 | 95 | 100 |
| Wax 1 | wt% | 5 | - | - |
| Wax 2 | wt% | - | 5 | - |
| MFR2 | g/10 min | 0.84 | 0.81 | 0.80 |
| MFR21 | g/10 min | 64.9 | 63.1 | 47.4 |
| FRR21/2 | | 77 | 78 | 59 |
| Tc | °C | 116 | 116 | 117 |
| Tm | °C | 131 | 131 | 131 |
| Hm | J/g | 210 | 205 | 210 |
| Density | $kg/m^3$ | 955.7 | 956.0 | 955.5 |
| Mw | g/mol | 124500 | 123000 | 127000 |
| Mz | g/mol | 663500 | 679500 | 708000 |
| Mw/Mn | | 20.0 | 17.8 | 16.1 |
| Mz/Mw | | 5.3 | 5.5 | 5.6 |
| **Film** | | | | |
| Haze | % | 68.9 | 68.4 | 70.4 |
| Clarity | % | 25.4 | 25.9 | 22.4 |
| DDI | g | <20 | 33 | <20 |
| TM-MD | MPa | 1006 | 940 | 928 |
| TM-TD | MPa | 1321 | 1261 | 1255 |
| TM-MD/Haze | | 14.6 | 13.7 | 13.2 |

## Claims

1. A film comprising a polyethylene composition having a density of from 946.0 to 972.0 kg/$m^3$, determined according to ISO 1183, and a melt flow rate $MFR_2$ of from 0.1 to 3.0 g/10 min, determined according to ISO 1133 at a temperature of 190°C and a load of 2.16 kg, wherein the polyethylene composition comprises

   (A) from 85.0 to 98.0 wt%, based on the total weight of the polyethylene composition, of a multimodal high density polyethylene having a density of from 945 to 970 kg/$m^3$, determined according to ISO 1183, and a melt flow rate $MFR_2$ of 0.05 to 4.0 g/10 min, determined according to ISO 1133 at a temperature of 190°C and a load of 2.16 kg;
   wherein the multimodal high density polyethylene (A) comprises at least two polyethylene fractions (A-1) and (A-2)

      (A-1) from 40 to 60 wt%, based on the total weight of the multimodal high density polyethylene (A), of a first polyethylene fraction having a density of from 955 to 980 kg/$m^3$, determined according to ISO 1183, and a melt flow rate $MFR_2$ of 50 to 600 g/10 min, determined according to ISO 1133 at a temperature of 190°C and a load of 2.16 kg; and
      (A-2) from 40 to 60 wt%, based on the total weight of the multimodal high density polyethylene (A), of a second polyethylene fraction having a density of from 925 to 970 kg/$m^3$, determined according to ISO 1183, and a melt flow rate $MFR_2$ of 0.00001 to 1.0 g/10 min, determined according to ISO 1133 at a temperature of 190°C and a load of 2.16 kg;

   (B) from 2.0 to 15.0 wt%, based on the total weight of the polyethylene composition, of a polyethylene wax having a density of from 930 to 990 kg/$m^3$, determined according to ISO 1183.

2. The film according to claim 1 being a non-oriented film.

3. The film according to claim 1 or 2 being a monolayer film.

4. The film according to any one of the preceding claims being a cast film or a blown film.

5. The film according to any one of the preceding claims having a thickness of from 5 to 100 μm, preferably from 10 to 80 μm, more preferably from 25 to 60 μm.

6. The film according to any one of the preceding claims having one or more, preferably all of the following properties:

   • a haze of from 50.0 to 75.0 %, preferably from 50.0 to 72.0 %, more preferably from 60.0 to 70.0%, determined according to ASTM D1003 on a non-oriented blown film sample having a thickness of 40 μm and/or
   • a clarity of from 20.0 to 50.0 %, preferably from 22.5 to 50.0 %, more preferably from 24.0 to 40.0 %, determined according to ASTM D1003 on a non-oriented blown film sample having a thickness of 40 μm.

7. The film according to any one of the preceding claims having one or more, preferably all of the following properties:

   • a tensile modulus in machine direction (TM-MD) of from 850 to 1500 MPa, preferably from 900 to 1500 MPa, more preferably from 930 to 1250 MPa, determined according to ISO 527-3 on a non-oriented blown film sample having a thickness of 40 μm;
   • a tensile modulus in traverse direction (TM-TD) of from 1000 to 1750 MPa, preferably from 1100 to 1750 MPa, more preferably from 1200 to 1500 MPa, determined according to ISO 527-3 on a non-oriented blown film sample having a thickness of 40 μm; and/or
   • a ratio of a tensile modulus in machine direction (TM-MD) to haze (TM-MD/haze) of from 13.3 to 16.0 [MPa/%], preferably from 13.5 to 15.7 [MPa/%], more preferably from 13.7 to 15.7 [MPa/%], determined on a non-oriented blown film sample having a thickness of 40 μm.

8. The film according to any one of the preceding claims having a dart drop impact strength (DDI) of from 10 to 50 g, preferably from 15 to 45 g, more preferably from 17 to 40 g, determined according to ASTM D1709, method A on a non-oriented blown film sample having a thickness of 40 μm.

9. The film according to any one of the preceding claims wherein the polyethylene composition has one or more, preferably all of the following properties:

- a melt flow rate $MFR_{21}$ of from 50 to 90 g/10 min, preferably from 55 to 80 g/10 min, more preferably from 60 to 70 g/10 min, determined according to ISO 1133 at a temperature of 190°C and a load of 21.6 kg;
- a flow rate ratio $FRR_{21/2}$, being the ratio of $MFR_2$, to $MFR_2$, of from 45 to 100, preferably from 60 to 90, more preferably from 70 to 85;
- a melting temperature Tm of from 125 to 150°C, preferably from 127 to 145°C, more preferably from 130 to 140°C;
- a crystallization temperature Tc of from 105 to 130°C, preferably from 110 to 127°C, more preferably from 115 to 125°C;
- a melting enthalpy Hm of from 170 to 250 J/g, preferably from 185 to 240 J/g, more preferably from 200 to 225 J/g;
- a weight average molecular weight Mw of from 110000 to 135000 g/mol, preferably from 115000 to 130000 g/mol, more preferably from 120000 to 126000 g/mol;
- a z average molecular weight Mz of from 575000 to 725000 g/mol, preferably from 600000 to 700000 g/mol, more preferably from 625000 to 690000 g/mol;
- a Mw/Mn ratio of from 15.0 to 25.0, preferably from 16.5 to 23.0, more preferably from 17.0 to 22.0; and/or
- a Mz/Mw ratio of from 3.0 to 7.5, preferably from 4.0 to 7.0, more preferably from 5.0 to 6.0.

**10.** The film according to any one of the preceding claims wherein the multimodal high density polyethylene (A) has one or more, preferably all of the following properties:

- a melt flow rate $MFR_{21}$ of from 15 to 75 g/10 min, preferably from 20 to 65 g/10 min, more preferably from 30 to 55 g/10 min, determined according to ISO 1133 at a temperature of 190°C and a load of 21.6 kg;
- a flow rate ratio $FRR_{21/2}$, being the ratio of $MFR_{21}$ to $MFR_2$, of from 35 to 85, preferably from 45 to 75, more preferably from 50 to 65;
- a melting temperature Tm of from 125 to 150°C, preferably from 127 to 145°C, more preferably from 130 to 140°C;
- a crystallization temperature Tc of from 105 to 130°C, preferably from 110 to 127°C, more preferably from 115 to 125°C;
- a melting enthalpy Hm of from 170 to 250 J/g, preferably from 185 to 240 J/g, more preferably from 200 to 225 J/g;
- a weight average molecular weight Mw of from 115000 to 140000 g/mol, preferably from 120000 to 135000 g/mol, more preferably from 125000 to 132000 g/mol;
- a z average molecular weight Mz of from 600000 to 750000 g/mol, preferably from 625000 to 735000 g/mol, more preferably from 650000 to 725000 g/mol;
- a Mw/Mn ratio of from 10.0 to 22.5, preferably from 11.0 to 20.0, more preferably from 12.0 to 17.5; and/or
- a Mz/Mw ratio of from 3.0 to 7.5, preferably from 4.0 to 7.0, more preferably from 5.0 to 6.0.

**11.** The film according to any one of the preceding claims wherein the first polyethylene fraction (A-1) is an ethylene homopolymer fraction.

**12.** The film according to any one of the preceding claims wherein the second polyethylene fraction (A-2) is an ethylene copolymer fraction with one or more comonomer units selected from C3 to C12 alpha-olefin monomers, preferably from C4 to C8 alpha- olefin monomers, more preferably from 1-butene and 1-hexene, most preferably from 1-butene.

**13.** The film according to any one of the preceding claims wherein the polyethylene wax (B) has one or more, preferably all of the following properties:

- a melting temperature Tm of from 115 to 135°C, preferably from 118 to 132°C, more preferably from 120 to 130°C;
- a melting enthalpy Hm of from 200 to 300 J/g, preferably from 225 to 275 J/g, more preferably from 235 to 260 J/g;
- a weight average molecular weight Mw of from 1000 to 15000 g/mol, preferably from 2000 to 12500 g/mol, more preferably from 2500 to 10000 g/mol; and/or
- a Mw/Mn ratio of from 1.0 to 4.0, preferably from 1.2 to 3.5, still more preferably from 1.4 to 3.0.

**14.** The film according to any one of the preceding claims wherein the polymeric components of the polyethylene composition consist of the multimodal high density polyethylene (A) and the polyethylene wax (B).

**15.** The use of a polyethylene composition having a density of from 946.0 to 972.0 kg/$m^3$, determined according to ISO 1183, and a melt flow rate $MFR_2$ of from 0.1 to 3.0 g/10 min, determined according to ISO 1133 at a temperature of 190°C and a load of 2.16 kg, wherein the polyethylene composition comprises

(A) from 85.0 to 98.0 wt%, based on the total weight of the polyethylene composition, of a multimodal high density polyethylene having a density of from 945 to 970 kg/$m^3$, determined according to ISO 1183, and a melt flow rate $MFR_2$ of 0.05 to 4.0 g/10 min, determined according to ISO 1133 at a temperature of 190°C and a load of 2.16 kg;
wherein the multimodal high density polyethylene (A) comprises at least two polyethylene fractions (A-1) and (A-2)

(A-1) from 40 to 60 wt%, based on the total weight of the multimodal high density polyethylene (A), of a first polyethylene fraction having a density of from 955 to 980 kg/$m^3$, determined according to ISO 1183, and a melt flow rate $MFR_2$ of 50 to 600 g/10 min, determined according to ISO 1133 at a temperature of 190°C and a load of 2.16 kg; and
(A-2) from 40 to 60 wt%, based on the total weight of the multimodal high density polyethylene (A), of a second polyethylene fraction having a density of from 925 to 970 kg/$m^3$, determined according to ISO 1183, and a melt flow rate $MFR_2$ of 0.00001 to 1.0 g/10 min, determined according to ISO 1133 at a temperature of 190°C and a load of 2.16 kg;

(B) from 2.0 to 15.0 wt%, based on the total weight of the polyethylene composition, of a polyethylene wax having a density of from 930 to 990 kg/$m^3$, determined according to ISO 1183

for the production of a film according to any one of the preceding claims.

Europäisches Patentamt
European Patent Office
Office européen des brevets

# EUROPEAN SEARCH REPORT

Application Number
EP 22 15 9607

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2014/180989 A1 (BOREALIS AG [AT]; ABU DHABI POLYMERS COMPANY LTD BOROUGE L L C [AE]) 13 November 2014 (2014-11-13) * page 1, line 21 - page 2, line 18; claims; examples 1-6; tables * ----- | 1-15 | INV. C08J5/18 C08L23/06 C08L23/08 |
| Y | US 2010/056727 A1 (LIPISHAN COLIN [US] ET AL) 4 March 2010 (2010-03-04) * paragraphs [0007], [0128], [0137], [0158] - [0159], [0272]; claims; examples * ----- | 1-15 | |
| Y | EP 3 199 342 A1 (DOW GLOBAL TECHNOLOGIES LLC [US]) 2 August 2017 (2017-08-02) * paragraphs [0002], [0003]; claims; examples * ----- | 1-15 | |
| A | WO 2006/074693 A1 (BOREALIS TECH OY [FI]; LAIHO ERKKI [FI] ET AL.) 20 July 2006 (2006-07-20) * claims; examples * ----- | 1-15 | |

TECHNICAL FIELDS SEARCHED (IPC)

C08J
C08L

The present search report has been drawn up for all claims

1

| Place of search | Date of completion of the search | Examiner |
|---|---|---|
| Munich | 5 August 2022 | Frison, Céline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 15 9607

This annex lists the patent family members relating to the patent documents cited in the above-mentioned European search report. The members are as contained in the European Patent Office EDP file on
The European Patent Office is in no way liable for these particulars which are merely given for the purpose of information.

05-08-2022

| Patent document cited in search report | Publication date | Patent family member(s) | Publication date |
|---|---|---|---|
| WO 2014180989 A1 | 13-11-2014 | AU 2014264567 A1 | 19-11-2015 |
| | | BR 112015028045 A2 | 25-07-2017 |
| | | CL 2015003240 A1 | 10-06-2016 |
| | | CN 105408412 A | 16-03-2016 |
| | | EP 2994506 A1 | 16-03-2016 |
| | | ES 2636850 T3 | 09-10-2017 |
| | | MA 38644 A1 | 29-09-2017 |
| | | PE 20160102 A1 | 25-02-2016 |
| | | PH 12015502552 A1 | 22-02-2016 |
| | | PL 2994506 T3 | 30-11-2017 |
| | | RU 2015149952 A | 15-06-2017 |
| | | SG 11201509210U A | 30-12-2015 |
| | | TN 2015000489 A1 | 06-04-2017 |
| | | US 2016083488 A1 | 24-03-2016 |
| | | WO 2014180989 A1 | 13-11-2014 |
| US 2010056727 A1 | 04-03-2010 | AR 057507 A1 | 05-12-2007 |
| | | AT 444334 T | 15-10-2009 |
| | | BR PI0617049 A2 | 12-07-2011 |
| | | CA 2620083 A1 | 01-03-2007 |
| | | CN 101273087 A | 24-09-2008 |
| | | EP 1940942 A1 | 09-07-2008 |
| | | JP 5551362 B2 | 16-07-2014 |
| | | JP 2009506163 A | 12-02-2009 |
| | | US 2010056727 A1 | 04-03-2010 |
| | | WO 2007024746 A1 | 01-03-2007 |
| EP 3199342 A1 | 02-08-2017 | AR 107403 A1 | 25-04-2018 |
| | | BR 112018015437 A2 | 18-12-2018 |
| | | CA 3012454 A1 | 03-08-2017 |
| | | CN 108602337 A | 28-09-2018 |
| | | EP 3199342 A1 | 02-08-2017 |
| | | ES 2723575 T3 | 29-08-2019 |
| | | JP 6816153 B2 | 20-01-2021 |
| | | JP 2019506493 A | 07-03-2019 |
| | | US 2019048155 A1 | 14-02-2019 |
| | | WO 2017131998 A1 | 03-08-2017 |
| WO 2006074693 A1 | 20-07-2006 | BR PI0519319 A2 | 13-01-2009 |
| | | CN 101072824 A | 14-11-2007 |
| | | EA 200701226 A1 | 28-12-2007 |
| | | EP 1836255 A1 | 26-09-2007 |
| | | JP 2008527118 A | 24-07-2008 |
| | | US 2008097022 A1 | 24-04-2008 |
| | | WO 2006074693 A1 | 20-07-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020109289 A1
- WO 9744371 A
- WO 9618662 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- WO 9619503 A
- WO 9632420 A
- EP 1378528 A1
- EP 688794 A
- WO 9951646 A
- WO 0155230 A
- WO 2005118655 A
- EP 810235 A
- WO 2014096296 A
- WO 2016097193 A
- EP 2994506 A


### Non-patent literature cited in the description


- **B. HAGSTRÖM.** *Conference on Polymer Processing (The Polymer Processing Society), Extended Abstracts and Final Programme, Gothenburg,* 19 August 1997, vol. 4, 13
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253